# EUROPEAN PATENT SPECIFICATION

(11) **EP 3 619 052 B1**
(45) Date of publication and mention of the grant of the patent: **18.08.2021**
(21) Application number: 17771886.3
(22) Date of filing: 04.05.2017
(51) Int. Cl.: B60C 9/00, B60C 9/18, B60C 9/22

(54) **REINFORCEMENT STRIP FOR A CAP PLY OF A PNEUMATIC TIRE**
VERSTÄRKUNG BANDAGE FÜR EINE REIFEN
BANDE DE RENFORCEMENT DE PLI DE SOMMET DANS UN PNEUMATIQUE

(43) Date of publication of application: 11.03.2020
(73) Proprietor: Kordsa Teknik Tekstil Anonim Sirketi, Izmit/Kocaeli (TR)
(72) Inventor: FIDAN, Mehmet Sadettin, 41310 Izmit/Istanbul (TR); KAYA, Bahadir, 41310 Izmit/Kocaeli (TR); ARIFOGLU YENMEZ, Muge, 41310 Izmit/Kocaeli (TR)
(74) Representative: Dericioglu, E. Korhan
(86) International application number: PCT/TR2017/050172
(87) International publication number: WO 2018/203852

(56) References cited:
- US-A1- 2013 183 483
- US-A1- 2014 216 625
- US-A1- 2015 292 124
- US-A1- 2016 297 245

## Description

### Field of the Invention

The present invention relates to a cap ply reinforcement strip which is ready to use plain woven with high dtex cotton weft yarns in pneumatic radial tires.

### Background of the Invention

In radial tires, it is known that the cap ply reinforcement strip, which is wound on the belt package by making a small angle with the equatorial plane in order to form a cap ply, which improves performance of the radial tire especially at high speeds.

Winding nylon 6.6, PET (polyethylene terephthalate), hybrid (Aramide+Nylon 6.6, Aramide+PET) cords spirally as cap ply reinforcement layer on the belt package as strips has been applied for many years by several tire companies in order to improve high speed durability and handling performance in pneumatic radial tires. The said cord strips are obtained by cutting the calendered (rubberized) cord fabric in strips or rubberizing parallel single cords in a certain width during extrusion process without weft.

Low linear density (100-300 dtex) weft yarns which are used for the production of tire cord fabrics do not have any effect on tire performance and the only purpose of the usage of these weft yarns is to hold the warp yarns or cords together as parallel to each other.

The use of cotton weft yarns are known from the state of the art, JP2009067323 patent discloses use of cotton weft, having a linear density of which changes between 200 and 400 dtex. But the patent document is not considered as it is related to reinforcement strip.

The Japanese patent document no JP2016138345, an application known in the state of the art, discloses use of weft, polyester, or polyester may be coated composite yarn is used in cotton, having a linear density of which changes between 100 and 400 dtex. Also the said application disclosed in the said patent document is not considered as it is related to a reinforcement strip.

The U.S. patent document numbered US2016297245 states a cap ply reinforcement strip that is a ready-to-use plain woven fabric and is composed of hybrid cord warps and texturized weft yarns. The cap ply reinforcement strip for pneumatic tires eliminates calendering and strip preparation steps by eliminating the need for rubber coating and decreases the rolling resistance of the tire and the fuel consumption.

The U.S. patent document numbered US2015292124 discloses a hybrid fiber cord comprising a nylon filament and an aramid filament, the cord having more uniform physical properties and better strength and fatigue properties and being able to be made more easily than the conventional hybrid fiber cords such that it can be used to make an ultrahigh performance tire, and a method for manufacturing the same.

The U.S. patent document numbered US2013183483 is related with a reinforced rubber article containing a rubber article and a fibrous layer embedded into the rubber article. The fibrous layer contains monoaxially drawn tape elements having at least a first layer, an upper surface and a lower surface. The first layer comprises a blend of polyester and nylon 6. Methods of forming the reinforced rubber article are also disclosed.

The U.S. patent document numbered US2014216625 states a pneumatic tire carcass having a radial direction and a circumferential direction. The tire carcass comprises at least one ply of stabilizing fabric and an air-blocking layer attached to the stabilizing fabric. The stabilizing fabric contains a plurality of reinforcing yarns and is disposed within the carcass such that the reinforcing yarns are arranged in the radial direction of the carcass.

The European patent document numbered EP2037022 discloses a tire cord fabric is provided that has a first portion and a second portion. The tire cord fabric comprises warp cords oriented in the longitudinal direction and weft yarns oriented in the lateral direction. The warp cords are used in reinforcing pneumatic tires.

### Summary of the Invention

The objective of the present invention is to provide a cap ply reinforcement strip which is obtained by plain weaving the warp cords with the cotton weft yarns with high linear density for pneumatic radial tires.

Another objective of the present invention is to prevent excessive narrowing of the width of the tire cord fabric during heat-set process. When compared with texturized nylon weft yarns, the cotton weft yarns with high linear density narrow to half of the narrowing of texturized nylon weft yarns.

A further another objective of the present invention is to provide a lateral (transverse) warp cord separation (fraying) resistance from the weft yarns during cutting (slitting) process of the strip preparation and during strip winding process on the belt package.

These objectives have been achieved by a radial tire according to claim 1.

### Detailed Description of the Invention

"Cap ply reinforcement strip for pneumatic tires" developed to fulfill the objective of the present invention is illustrated in the accompanying figure wherein,

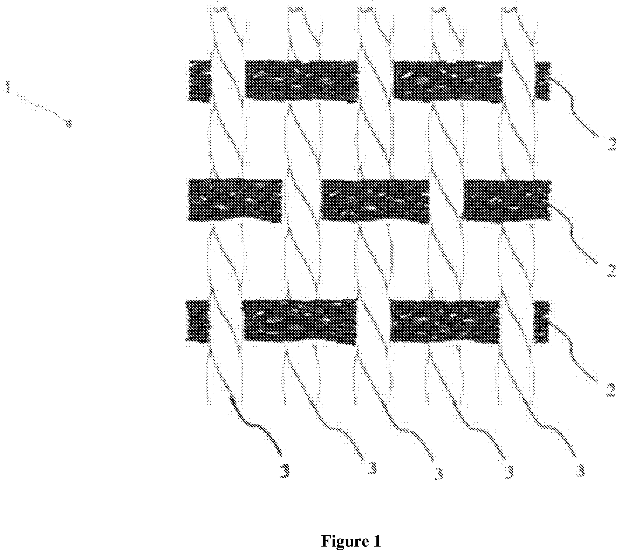

Figure 1 is the zoomed, top view of the cap ply reinforcement strip according to the invention.

The components given in the figure are numbered and the numbers refer to the following:
1. Cap ply reinforcement strip
2. Cotton weft yarn
3. Warp yarn

A cap ply reinforcement strip (1), which is wound spirally on the belt package of a radial tire such that it will have 0° to 5° with the equatorial plane and it is in direct contact with the tread rubber, wherein,
- plurality of cotton weft yarns (2) parallel to each other having a linear density of which changes between 400 and 2000 dtex, and
- the adhesive content on strip surface is at least 10% and maximum 60% by weight.

The cap ply reinforcement strip (1) of the present invention, which eliminates calendering and strip preparing stages and enables to reduce rolling resistance of the tire and the fuel consumption by avoiding the requirement for rubber coating thereon, comprises an adhesive dip on its outer surface that is required for tire production process.

In the preferred embodiment of the invention, the cotton weft yarns (2) and the warp yarns are fixed to each other with adhesive dipping material, and thus a strong bond is formed on contact points of the cotton weft yarn (2) and the warp cords (3) and warp cord (3) in the strip (1) is prevented from shifting aside and separating. The adhesive material used in one embodiment of the invention is RFL (Resorcinol Formaldehyde Latex), but RF-free adhesives can be also used.

The cotton weft yarns (2) absorb the adhesive material easier than polyamide texturized yarnsdue to their hydrophilic nature, this increases the resistance and stability of cap ply reinforcement strip (1) in the tire under dynamic conditions.

The width of the inventive cap ply reinforcement strip (1) varies between 5 to 30 mm, preferably 8 to 15 mm. The number of warp yarn (3) present in the 10 mm width of the cap ply reinforcement strip (1) may vary between 3 to 20. The twist numbers of warp cords (3) are between 100 to 800 twist/meter (tpm), preferably 250 to 350 tpm. If the twist numbers of warp cords is less than 100 twist/meter (tpm), the fatigue performance of warp yarns decreases. On the other hand, when the twist numbers of warp cords is exceeds 800 twist/meter (tpm), the breaking strength of warp yarns decreases.

The warp cords (3) used in the inventive cap ply reinforcement strip (1) can be comprised of hybrid cords such as PET-nylon 6.6, aramide-nylon 6.6 or aramide-PET as well as it can be comprised of nylon 6.6, PET (polyethylene terephthalate), or aramide cords.

The linear densities of the cotton weft yarns (2) can vary between 400 to 2000 dtex, preferably 600 to 1500 dtex. If the linear densities is less than 400 dtex, there is concern that cotton weft yarns can not hold the warp yarns or cords together as parallel to each other cap ply reinforcement strip form during cutting process. On the other hand, when the linear densities is exceeds 2000 dtex, the cap ply reinforcement strip gains excessive adhesive content, there is a concern that air voids occur frequently in the tire manufacturing process.

The cotton yarns (2) used as weft can be twisted or non-twisted. The twist number of cotton weft yarns (2) can be 0 to 600, preferably 200 to 500. The number of cotton weft yarns (2) in a 10 cm long strip (1) can be 5 to 50, preferably 10 to 20. If the number of cotton weft yarns in a 10 cm long strip is less than 5, there is concern that cotton weft yarns can not hold the warp cords together as parallel to each other cap ply reinforcement strip form during cutting process. On the other hand, when the number of cotton weft yarns in a 10 cm long strip is exceeds 50, the cap ply reinforcement strip gains excessive adhesive content, there is a concern that air voids occur frequently in the tire manufacturing process.

The amount of the adhesive dip in the cap ply reinforcement strip is between 10% to 60%, preferably 10% to 40 or more preferably 10% to 25% by weight. If the amount of the adhesive dip in the cap ply reinforcement strip is less than 10%, there is concern that green tackiness performance can be observed during tire manufacturing process. On the other hand, when the amount of the adhesive dip in the cap ply reinforcement strip is exceeds 60%, the cap ply reinforcement strip gains excessive adhesive content, there is a concern that air voids occur frequently in the tire manufacturing process.

## Claims

1. A radial tire (1), comprising a belt package and a cap ply reinforcement strip (1) which is wound spirally on the belt package such that it will have 0° to 5° with the equatorial plane and it is in direct contact with the tread rubber, the cap ply reinforcement strip comprising warp yarns (3) and cotton weft yarns (2), wherein surface of the said strip is dipped with an adhesive material which is at least 10% and maximum 60% by the weight of the cap ply reinforcement strip **characterized by comprising**
- plurality of cotton weft yarns (2) parallel to each other wherein the linear density of which changes between 400 and 2000 dtex.

2. A tire (1) according to claim 1 **characterized by** the linear density values of the said cotton weft yarns (2) are between 600 to 1500 dtex.

3. A tire (1) according to any one of the preceding claims **characterized by** the said cotton yarns (2) used as weft are twisted or non-twisted.

4. A tire (1) according to claim 1-2, **characterized in by** the said adhesive material is RFL (Resorcinol Formaldehyde Latex).

5. A tire (1) according to claim 1-2, **characterized by** the said adhesive material does not contain any resorcinol formaldehyde (Resorcinol Formaldehyde Free).

6. A tire (1) according to any one of the preceding claims, **characterized by** said adhesive material content is between 10% to 40% or 10% to 25% by the weight of the cap ply reinforcement strip.

7. A tire (1) according to any one of the preceding claims, **characterized by** the width of the said strip is between 5 to 30 mm.

8. A tire (1) according to any one of the preceding claims, **characterized by** the width of the said strip is between 8 to 15 mm.

9. A tire (1) according to any one of the preceding claims, **characterized by** the number of the said warp yarns or the cords (3) is 3 to 15 in a width of 10 mm.

10. A tire (1) according to any one of the preceding claims, **characterized by** a cord twisting degree of the said warp yarns (3) is between 100 and 800 twist/meter (tpm).

11. A tire (1) according to any one of the preceding claims, **characterized by** a cord twisting degree of the said warp yarns (3) is between 250 and 350 tpm.

12. A tire (1) according to any one of the preceding claims, **characterized by** a number of the said cotton weft yarns (2) is 5 to 50, preferably 10 to 20 in a strip (1) having the length of 10 cm.

13. A tire (1) according to any one of the preceding claims, **characterized by** the said warp yarns (3) are comprising of nylon 6.6, PET (polyethylene terephthalate), aramide cords or hybrid cords such as PET-nylon 6.6, aramide-nylon 6.6 or aramide-PET.

## Patentansprüche

1. Radialreifen (1), umfassend ein Gürtelpaket und einen Decklagenverstärkungsstreifen, der spiralförmig auf das Gürtelpaket gewickelt ist, sodass er einen Winkel von 0° bis 5° mit der Äquatorialebene aufweisen und in direktem Kontakt mit dem Laufflächengummi stehen wird, wobei der Decklagenverstärkungsstreifen Kettfäden (3) und Baumwoll-Schußfäden (2) umfasst, wobei die Oberfläche des Streifens mit einem Klebstoff getaucht ist, das mindestens 10% und maximal 60% des Gewichts des Decklagenverstärkungsstreifens beträgt, **gekennzeichnet durch** Umfassung
- einer Vielzahl von zueinander parallel stehenden Baumwoll-Schußfäden (2), wobei sich die lineare Dichte zwischen 400 und 2000 dtex ändert.

2. Reifen (1) nach Anspruch 1, **dadurch gekennzeichnet, dass** die linearen Dichtewerte der genannten Baumwoll-Schussfäden (2) zwischen 600 bis 1500 dtex liegen.

3. Reifen (1) nach irgendeinem der vorhergehenden Ansprüche, **dadurch gekennzeichnet, dass** die als Schussfäden verwendeten Baumwollfäden (2) gedreht oder nicht gedreht sind.

4. Reifen (1) nach Anspruch 1-2, **dadurch gekennzeichnet, dass** der genannte Klebstoffmaterial RFL (Resorcinol Formaldehyde-Latex) ist.

5. Reifen (1) nach Anspruch 1-2, **dadurch gekennzeichnet, dass** der genannte Klebstoff kein Resorcin-Formaldehyd enthält (Resorcin-Formaldehydfrei).

6. Reifen (1) nach irgendeinem der vorhergehenden Ansprüche, **dadurch gekennzeichnet, *dass*** der Anteil des Klebstoffs zwischen 10% bis 40% oder 10% bis 25%, bezogen auf das Gewicht des Decklagenverstärkungsstreifens, beträgt.

7. Reifen (1) nach irgendeinem der vorhergehenden Ansprüche, ***dadurch gekennzeichnet, dass*** die Breite des genannten Streifens zwischen 5 bis 30 mm beträgt.

8. Reifen (1) nach irgendeinem der vorangehenden Ansprüche, ***dadurch gekennzeichnet, dass*** die Breite des genannten Streifens zwischen 8 bis 15 mm beträgt.

9. Reifen (1) nach irgendeinem der vorangehenden Ansprüche, ***dadurch gekennzeichnet, dass*** die Anzahl der genannten Kettfäden oder der Kordeln (3) 3 bis 15 bei einer Breite von 10 mm beträgt.

10. Reifen (1) nach einem der vorangehenden Ansprüche, **dadurch *gekennzeichnet, dass*** der Kordelverdrehungsgrad der genannten Kettfäden (3) zwischen 100 und 800 Drehungen/Meter (tpm) liegt.

11. Reifen (1) nach irgendeinem der vorangehenden Ansprüche, ***dadurch gekennzeichnet, dass*** der Kordelverdrehungsgrad der genannten Kettfäden (3) zwischen 250 und 350 tpm liegt.

12. Reifen (1) nach irgendeinem der vorangehenden Ansprüche, ***dadurch gekennzeichnet, dass*** eine Anzahl der genannten Baumwoll-Schussfäden (2) 5 bis 50, vorzugsweise 10 bis 20 in einem Streifen (1) mit der Länge von 10 cm beträgt.

13. Reifen (1) nach irgendeinem der vorhergehenden Ansprüche, ***dadurch gekennzeichnet, dass*** die Kettfäden (3) aus Nylon (6.6), PET (polyethylenterephthalate), Aramid-Kordeln oder Hybrid-Kordeln wie PET-Nylon (6.6), Aramid-Nylon (6.6) oder Aramid-PET bestehen.

## Revendications

1. Pneumatique radial (1), comprenant un paquet de ceinture et une bande de nappe de sommet de renforcement (1) qui est enroulée en spirale sur le paquet de ceinture de telle sorte qu'elle présente un angle de 0° à 5° avec le plan équatorial et qu'elle soit en contact direct avec la gomme de bande de roulement, la bande de nappe de sommet comprenant des fils de chaîne (3) et des fils de trame en coton (2), dans lequel la surface de ladite bande est imprégnée d'un matériau adhésif qui représente au moins 10 % et au maximum 60 % du poids de la bande de nappe de sommet, **caractérisé par le fait qu'il comprend**
- une pluralité de fils de trame en coton (2) parallèles les uns aux autres, dont la densité linéaire varie entre 400 et 2000 dtex.

2. Pneumatique (1) selon la revendication 1, **caractérisé par** les valeurs de densité linéaire desdits fils de trame de coton (2) sont comprises entre 600 à 1500 dtex.

3. Pneumatique (1) selon l'une quelconque des revendications précédentes, **caractérisé par** lesdits fils de coton (2) utilisés comme trame sont tordus ou non tordus.

4. Pneumatique (1) selon la revendication 1-2, **caractérisé par** ledit matériau adhésif est du RFL (Latex Résorcinol-Formaldéhyde).

5. Pneumatique (1) selon la revendication 1-2, **caractérisé par** ledit matériau adhésif ne contient pas de résorcinol formaldéhyde (Sans Résorcinol-Formaldéhyde).

6. Pneumatique (1) selon l'une quelconque des revendications précédentes, **caractérisé par** ladite teneur en matériau adhésif est comprise entre 10 % à 40 % ou 10 % à 25 % par rapport au poids de la bande de nappe de sommet.

7. Pneumatique (1) selon l'une quelconque des revendications précédentes, **caractérisé par** la largeur de ladite bande est de 5 à 30 mm.

8. Pneumatique (1) selon l'une quelconque des revendications précédentes, **caractérisé par** la largeur de ladite bande est de 8 à 15 mm.

9. Pneumatique (1) selon l'une quelconque des revendications précédentes, **caractérisé par** le nombre desdits fils de chaîne ou des cordons (3) est de 3 à 15 dans une largeur de 10 mm.

10. Pneumatique (1) selon l'une quelconque des revendications précédentes, **caractérisé par** un degré de torsion de cordon desdits fils de chaîne (3) est compris entre 100 et 800 torsions/mètre (tpm).

11. Pneumatique (1) selon l'une quelconque des revendications précédentes, **caractérisé par** un degré de torsion de cordon desdits fils de chaîne (3) est compris entre 250 et 350 tpm.

12. Pneumatique (1) selon l'une quelconque des revendications précédentes, **caractérisé par** un nombre desdits fils de trame en coton (2) est de 5 à 50, de préférence de 10 à 20 dans une bande (1) ayant une longueur de 10 cm.

13. Pneumatique (1) selon l'une quelconque des revendications précédentes, **caractérisé par** lesdites fils de chaîne (3) comprennent du nylon 6.6, du PET (polyéthylène téréphtalate), des cordons d'aramide ou des câbles hybrides PET-nylon 6.6, aramide-nylon 6.6 ou aramide-PET.
